# EUROPEAN PATENT SPECIFICATION

(11) **EP 3 288 700 B1**
(45) Date of publication and mention of the grant of the patent: **13.09.2023**
(21) Application number: 16787136.7
(22) Date of filing: 28.04.2016
(51) Int. Cl.: B22F 10/14, B22F 12/52, B22F 12/63, B22F 12/67, B29C 64/205, B33Y 30/00, B33Y 40/00, G03G 15/22

(54) **POWDER RECOATER FOR THREE-DIMENSIONAL PRINTER**
PULVERBESCHICHTER FÜR DREIDIMENSIONALEN DRUCKER
RECOUCHEUSE DE POUDRE POUR IMPRIMANTE EN TROIS DIMENSIONS

(30) Priority: 30.04.2015 US 201562155155 P; 18.05.2015 US 201562162980 P
(43) Date of publication of application: 07.03.2018
(73) Proprietor: The Exone Company, North Huntingdon, PA 15642 (US)
(72) Inventor: KLEIN, Andrew, P., Pittsburgh, PA 15232 (US); BRUNERMER, Daniel, T., Leechburg, PA 15656 (US); McCOY, Michael, J., Murrysville, PA 15668 (US); DUGAN, Anthony, S., Irwin, PA 15642 (US); VOSS, Lawrence, J., Pittsburgh, PA 15239 (US); LIZZI, Thomas, Harmony, PA 16037 (US)
(74) Representative: Viering, Jentschura & Partner mbB Patent- und Rechtsanwälte
(86) International application number: PCT/US2016/029757
(87) International publication number: WO 2016/176432

(56) References cited:
- WO-A1-2014/109703
- DE-C1- 19 530 295
- US-A- 5 387 380
- US-A1- 2002 195 746
- US-A1- 2004 173 946
- US-A1- 2004 182 510
- US-A1- 2004 182 510
- US-A1- 2007 298 182
- US-A1- 2009 211 690
- US-B1- 8 119 053
- US-B2- 8 105 527

## Description

### Background

Field of the Invention: The present invention relates to a device for applying powder layers across a substrate or atop an existing powder bed. The device has particular utility in embodiments which are adapted for use in depositing powder layers for three-dimensional printing and as part of a three-dimensional printing apparatus.

Background of the Art: There are today various types of three-dimensional printers, i.e. devices that convert electronic representations of three-dimensional articles into the articles themselves by the systematic building-up of one or more materials. The device of the present invention finds particular utility with the types of three-dimensional printers which create three-dimensional articles by selectively binding together preselected areas of successively deposited layers of powder. These types of three-dimensional printers are referred to herein as "powder-layer three-dimensional printers" because the construction of the three-dimensional article by such printers utilizes layers of powders as a build material. Examples of such types of powder-based three-dimensional printers include, without limitation, the binder-jet three-dimensional printers, the selective sintering three-dimensional printers, and the electron beam melting three-dimensional printers.

It is to be understood that the term "powder" is also sometimes referred to in the art as "particulate material" or "particles" and the term "powder" is to be construed herein as meaning any such material, by whatever name, that is used in such three-dimensional printers as a layer-forming material. Powder may comprise any type of material capable of taking on the powder form, e.g. metal, plastics, ceramics, carbon, graphite, composite materials, minerals, etc., and combinations thereof. The term "build powder" is used herein to refer to a powder which is used to form the powder layers and from which the article is built in a powder-layer three-dimensional printer.

During the operation of a powder-layer three-dimensional printer, a first layer of a build powder is deposited upon a vertically indexible build platform and then successive powder layers are deposited one at a time upon the first powder layer. Selected portions of selected powder layers are treated to bind the powders in those portions together as the three-dimensional article is formed. Collectively, the portions of the deposited powder layers which are not bound together are referred to herein as a "powder bed."

In some powder-layer three-dimensional printers, each powder layer is formed by transferring a predetermined quantity of build powder from an open-top stationary powder reservoir by first indexing upward a platform which supports the powder within the reservoir a predetermined amount to raise the predetermined quantity above the reservoir walls and then pushing that quantity of powder across the top of the build platform or the powder bed to form a powder layer. In some powder-layer three-dimensional printers, each powder layer is deposited upon the build platform or the extant powder bed by a traveling powder dispenser, which may or may not include some device which is adapted to level the top of the powder layer.

The process of forming a powder layer is sometimes referred to in the art, and is referred to herein, as "recoating." The device or combination of devices of a particular powder-layer three-dimensional printer that accomplishes the recoating is sometimes referred to in the art, and is referred to herein, as a "recoater."

Although the recoaters existing in the art today generally work well for their intended purposes, there is still a need in the art to develop recoaters which consistently provide good powder layer uniformity. The present invention makes such an improvement.

Furthermore, when fine powders are used to make the powder layers, a problem with conventional recoaters is that a plume of fine powders may arise in the vicinity of the powder bed or other substrate during the deposition of the powder from the recoater. Some of the embodiments of the present invention ameliorate or eliminate this pluming problem. From e.g. US 2004/01 82510 A1 a device for producing solid bodies by sequential layer buildup is known.

### Summary of the Invention

The present invention provides a recoater according to claim 1. Further embodiments of the recoater are described in the dependent claims. That is, the present invention provides a device for applying powder layers across a substrate or atop an existing powder bed. The device has particular utility in embodiments which are adapted for use in depositing powder layers for three-dimensional printing and as part of a three-dimensional printing apparatus. The device is sometimes hereinafter referred to as "inventive recoater" or, where the context is clear that the inventive recoater is meant, sometimes simply as "recoater."

The inventive recoater comprises a carriage adapted to move across a substrate or an existing powder bed. The inventive recoater also comprises a powder reservoir for containing a desired amount of powder. The powder reservoir has one or more first openings at or near its top for receiving powder and one or more second openings at or near its bottom for dispensing powder. The inventive recoater also comprises a conveyor belt in operative communication with the one or more of the second openings of the powder reservoir and adapted to convey powder from the powder reservoir and to dispense the conveyed powder as a powder curtain. The term "operative communication" in this context means that the conveyor belt is adapted to receive powder from one or more of the second openings.

In some embodiments, the inventive recoater also comprises a powder deflector positioned to substantially uniformly intercept the powder curtain and deflect the powder it contains onto the substrate or powder bed surface.

In some embodiments, the inventive recoater includes one or more leveling devices, e.g., a roller, a doctor blade, et cetera, which are adapted to level out the powder that has been deflected onto the substrate or powder bed by the powder deflector. In some embodiments, the powder deflector and a leveling device are provided combined as a single component of the inventive recoater.

In some embodiments of the present invention, the conveyor belt is adapted to have a downwardly inclined section which controllably conveys the powder from the height at which it was received onto the conveyor belt from the powder reservoir to a lower height which is proximal to the powder bed or other substrate onto which the powder is to be deposited. The powder curtain emitted from the conveyor belt at this reduced height entrains much less of the surrounding air (or other ambient atmosphere) and has a reduced amount of kinetic energy, thus reducing or eliminating the amount of pluming of fine powders. A powder deflector may optionally be used to intercept the powder curtain and deflect the powder it contains onto the powder bed or other substrate so as to further reduce the amount of pluming.

In some embodiments of the present invention, a downwardly inclined chute is used instead of or in conjunction with a downwardly inclined section of the conveyor belt to controllably transport the powder to a lower height which is proximal to the powder bed or other substrate onto which the powder is to be deposited. A powder deflector may optionally be used to intercept the powder curtain emitted from the end of the chute and deflect the powder it contains onto the powder bed or other substrate so as to further reduce the amount of pluming.

The present invention also includes powder-layer three-dimensional printers which comprise a recoater such as described in the previous paragraphs of this invention summary section.

### Brief Description of the Drawings

The criticality of the features and merits of the present invention will be better understood by reference to the attached drawings. It is to be understood, however, that the drawings are designed for the purpose of illustration only and not as a definition of the limits of the present invention.
FIG. 1 is a schematic perspective view of a powder-layer three-dimensional printer embodiment.
FIG. 2 is a schematic front perspective view of a recoater embodiment.
FIG. 3 is a schematic perspective cross-sectional view taken along cutting plane **3-3** of FIG. 2.
FIG. 4 is a schematic side cross-sectional view taken along cutting plane **3-3** of FIG. 2
FIG. 5 is a schematic side view of a recoater embodiment having a roller as a leveling device.
FIG. 6 is a schematic side view of a recoater embodiment having a doctor blade as a leveling device.
FIG. 7 is a schematic cross-sectional side view of a recoater embodiment having a shrouding enclosure.
FIG. 8 is a schematic perspective partial view of a recoater embodiment.
FIG. 9 is a schematic cross-sectional partial side view of a recoater embodiment wherein the conveyor belt is in operative communication with a side opening of the powder reservoir.
FIG. 10 is another schematic cross-sectional partial side view of a recoater embodiment wherein the conveyor belt is in operative communication with a side opening of the powder reservoir.
FIG. 11 is a schematic cross-sectional side view of a recoater embodiment having an angled blade-type powder deflector.
FIG. 12 is a schematic cross-sectional side view of a recoater embodiment having an arcuate powder deflector.
FIG. 13 is a schematic cross-sectional side view of a recoater embodiment having a powder deflector-leveler.
FIG. 14 is a schematic cross-sectional side view of a recoater embodiment having a conveyor belt having a downwardly inclined section.
FIG. 15 is a schematic cross-sectional side view of a recoater embodiment having a downwardly inclined chute.

### Description of Preferred Embodiments

In this section, some preferred embodiments of the present invention are described in detail sufficient for one skilled in the art to practice the present invention without undue experimentation. It is to be understood, however, that the fact that a limited number of preferred embodiments are described herein does not in any way limit the scope of the present invention as set forth in the claims. It is to be understood that whenever a range of values is described herein or in the claims that the range includes the end points and every point therebetween as if each and every such point had been expressly described. Unless otherwise stated, the word "about" as used herein and in the claims is to be construed as meaning the normal measuring and/or fabrication limitations related to the value which the word "about" modifies. Unless expressly stated otherwise, the term "embodiment" is used herein to mean an embodiment of the present invention.

The recoaters of the present invention have particular utility with powder-layer three-dimensional printers. Although the recoaters may be used with any type of powder-layer three-dimensional printers, for the sake of conciseness, the only type of powder-layer three-dimensional printers that will be discussed in this section are those of the binder-jetting three-dimensional printer type. The binder-jetting three-dimensional printers are also sometimes in the art referred to as "three-dimensional inkjet printers" because the binder jetting is done using a print head that resembles those developed for inkjet printing. The basic binder jetting three-dimensional printing process was invented 1980's and developed in the 1990's at the Massachusetts Institute of Technology and is described in several United States patents, including the following United States patents: 5,490,882 to Sachs et al., 5,490,962 to Cima et al., 5,518,680 to Cima et al., 5,660,621 to Bredt et al., 5,775,402 to Sachs et al., 5,807,437 to Sachs et al., 5,814,161 to Sachs et al., 5,851,465 to Bredt, 5,869,170 to Cima et al., 5,940,674 to Sachs et al., 6,036,777 to Sachs et al., 6,070,973 to Sachs et al., 6,109,332 to Sachs et al., 6,112,804 to Sachs et al., 6,139,574 to Vacanti et al., 6,146,567 to Sachs et al., 6,176,874 to Vacanti et al., 6,197,575 to Griffith et al., 6,280,771 to Monkhouse et al., 6,354,361 to Sachs et al., 6,397,722 to Sachs et al., 6,454,811 to Sherwood et al., 6,471,992 to Yoo et al., 6,508,980 to Sachs et al., 6,514,518 to Monkhouse et al., 6,530,958 to Cima et al., 6,596,224 to Sachs et al., 6,629,559 to Sachs et al., 6,945,638 to Teung et al., 7,077,334 to Sachs et al., 7,250,134 to Sachs et al., 7,276,252 to Payumo et al., 7,300,668 to Pryce et al., 7,815,826 to Serdy et al., 7,820,201 to Pryce et al., 7,875,290 to Payumo et al., 7,931,914 to Pryce et al., 8,088,415 to Wang et al., 8,211,226 to Bredt et al., and 8,465,777 to Wang et al.

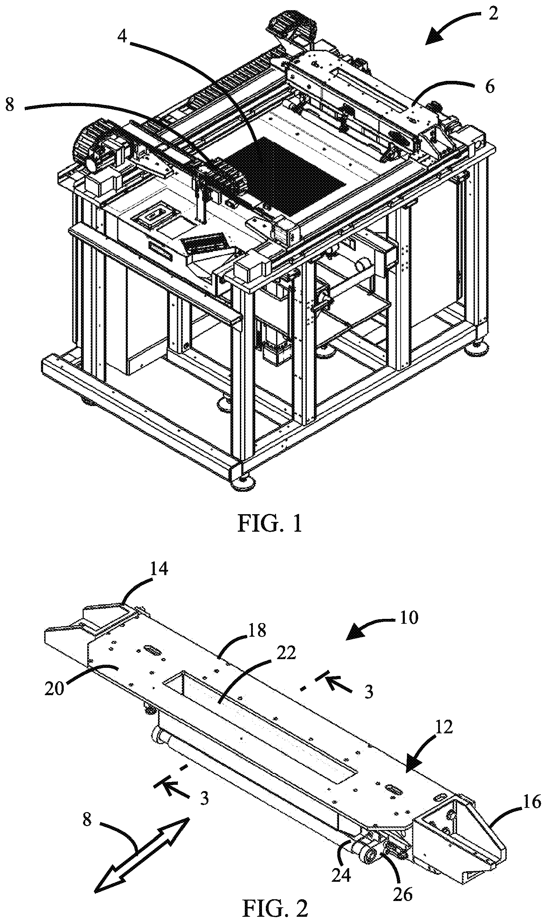

Referring to FIG. 1, there is shown a schematic perspective view of a powder-layer three-dimensional printer **2** embodiment. The printer **2** includes a powder bed **4** contained within a removable build box, a controllably movable recoater **6,** and a controllably movable printing device **8.** During the operation of the printer **2,** after the recoater **6** has deposited one or more layers, the printing device **8** imparts the image of a slice of the article or articles which are to be printed by selectively printing a binder onto the uppermost deposited powder layer. The floor of the build box is indexed downward to receive each next layer deposited by the inventive recoater **6.** The process of layer deposition and printing is continued until all of the desired article or articles have been printed.

FIG. 2 shows a schematic front perspective view of an embodiment of an inventive recoater, i.e., the recoater **10.** The recoater **10** has a carriage **12** having first and second support ends **14, 16,** which are adapted to movably support the recoater **10** upon a set of corresponding tracks (not shown). The carriage **12** also has a bridge section **18** extending between the first and second support ends **14, 16** and a top cover **20.** The recoater **10** also has a powder reservoir **22** which is adapted to contain a build powder (not shown) which is selectively dispensed during the layer forming process. The recoater **10** is movable with respect to the powder bed or other substrate. The recoater **10** may be controllably moved by one or more drive mechanisms which are external to the recoater, integral to the recoater, or partially external and partially integral to the recoater. In some preferred embodiments, a drive mechanism is connected to one or both of the first and second supports **14, 16** to controllably move the recoater **10** in the directions indicated by arrow **8.** The recoater **10** also has a conveyor belt **24** which is adapted to transport build powder from the reservoir **22** and dispense the build powder as a powder curtain. The conveyor belt **24** is controllably supported by a conveyor belt support system **26.**

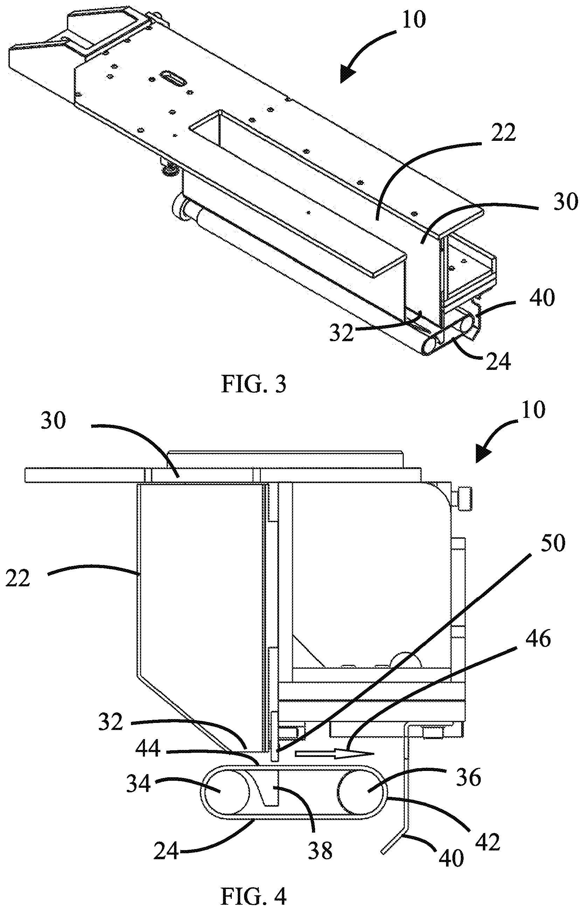

FIGS. 3 and 4 are, respectively, a schematic perspective cross-sectional view and a schematic side cross-sectional view, both taken along cutting plane **3-3** of FIG. 2. Referring now to these drawings, the reservoir **22** has a top opening **30** for receiving build powder and a bottom opening **32** for dispensing build powder. The bottom opening **32** is in operative communication with the conveyor belt **24,** which is supported by the the conveyor belt support system **26** (see FIG. 2). The conveyor belt support system **26** comprises first and second rollers **34, 36,** at least one of which is controllably driven by a motor system (not shown). The conveyor belt support system **26** also comprises a support table **38** which is positioned so as to ameliorate or eliminate sagging of the conveyor belt **24** under the weight of the build powder within the reservoir **22.** Also visible in these drawings is a portion of a powder deflector **40** that is part of the recoater **10.** The powder deflector **40** is fixedly or controllably spaced from the dispensing end **42** of the conveyor belt **24** and preferably extends at least the width of the conveyor belt **24** so as to intercept the powder curtain before it contacts the powder bed or other substrate. The bottom edge of the powder deflector **40** is sufficiently spaced above the powder bed or other substrate so that it does not scoop up or plow into the build powder that it is depositing. During operation of the recoater **10,** as the recoater **10** traverses the powder bed or other substrate, the top side **44** of the conveyor belt **24** moves at a controlled speed to convey build powder from the reservoir **22** past a gate **50** in the direction indicated by the arrow **46** to form a powder curtain (not shown). The powder curtain impacts and is deflected by the powder deflector **40** onto the powder bed or other substrate. Without intending to be bound, the inventors believe that this deflection diminishes the impact energy the powder curtain imparts to an underlying powder bed and thereby reduces or eliminates disruption of the underlying powder bed that would otherwise be caused by the impact of the falling powder curtain. The gate **50** may be fixed but is preferably adjustable to control the gap between the bottom of the gate **50** and the top side **44** of the conveyor belt **24** so as to control the thickness of the powder layer being conveyed by the conveyor belt **24.**

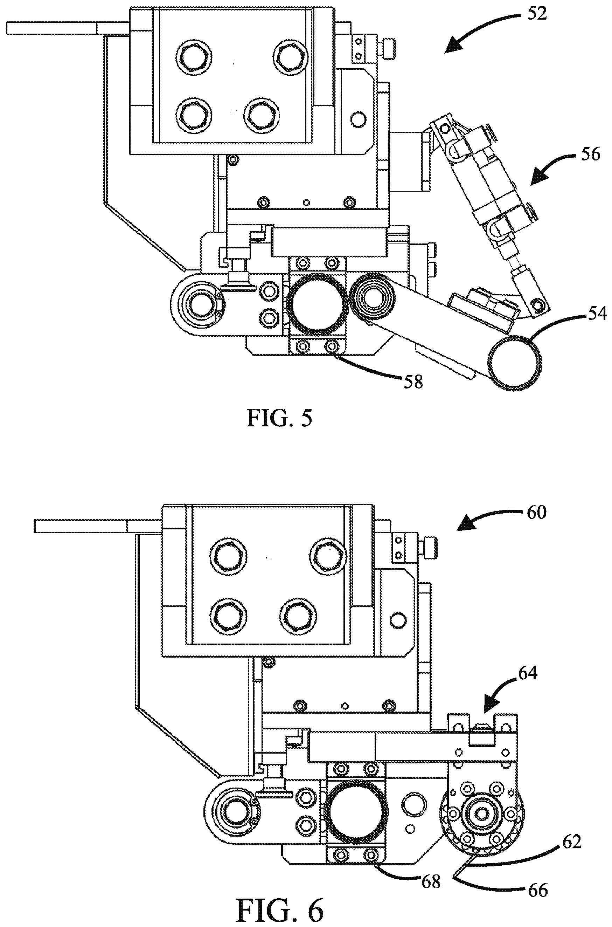

In some preferred embodiments, the recoater includes a leveling device. The leveling device may be any of the types that are known in art, and include, without limitation, doctor blades, rollers, the rotating blades described in U. S. Patent No. 7,879,393 B2 to Ederer et al., and the powder spreaders described in U. S. Patent No. 8,568,124 B2 to Brunermer. FIG. 5 shows an embodiment in which the recoater **52** includes a roller **54** as a leveling device. The roller **52** is a counter-rotating roller, but a roller may be used which is an idler roller or a roller that is driven to roll in the direction of travel of the recoater **52.** The roller **54** includes a supporting drive and positioning mechanism **56** which permits the roller **54** to be controllably positioned and driven. Note that the bottom tip of the powder deflector **58** of the recoater **52** is just visible in the drawing.

FIG. 6 shows an embodiment of the recoater **60** which includes as a leveling device a doctor blade **62** which is selectively angularly positionable, i.e., the angle of the doctor blade **62** relative to the vertical is selectively controllable. The doctor blade **62** is mounted on a support and positioning mechanism **64** which permits the angle of the doctor blade **62** from the vertical to be selectively controlled. The profile of the working end **66** of the doctor blade **62** (or any doctor blade employed in an embodiment) may have any desired shape, e.g., square, rounded, knife-blade, et cetera. Note that some embodiments include doctor blades which are at a fixed angle relative to the vertical. The bottom tip of the powder deflector **68** of the recoater **60** is just visible in the drawing.

It is also to be understood that the height of the bottom of the leveling device above the powder bed or other substrate acts as a control of the thickness of the powder layer being formed by the recoater. Although the leveling device may be configured to be a fixed height above the powder bed or other substrate, it is preferable that the leveling device be configured so that this height is selectable.

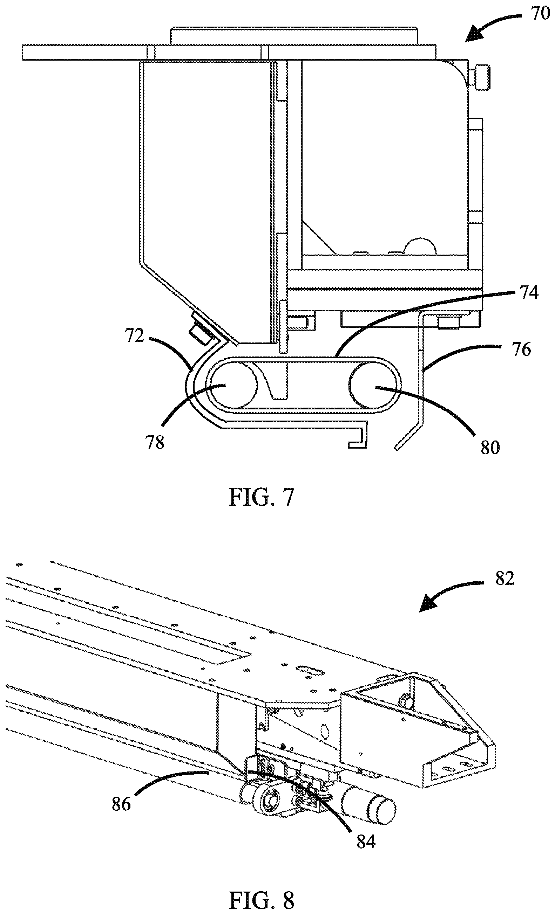

In some preferred embodiments, the recoater includes a shrouding enclosure adapted to at least partially contain a cloud or plume of fine build powder which may come into being as a result of the dispensing of build powder from the recoater onto a powder bed or other substrate. Referring to FIG. 7, there is shown a recoater **70** which is similar to the recoater **40** of FIG. 4 except it includes a shroud **72** which is positioned to enclose the space around the conveyor belt **74** and the space through which the powder curtain is formed and then deflected to an underlying powder bed or substrate by the powder deflector **76.** Note that in this embodiment, the shroud **72** includes the powder deflector **76.** Preferably, seals, such as vee-seals, are provided to seal around the rollers **78, 80** near their respective supporting ends where they extend through the shroud **72.**

In some preferred embodiments, the recoater may include one or more features to aid in preventing the build powder from escaping from the powder reservoir in the vicinity of the conveyor belt. Referring to FIG. 8, there is shown a recoater **82,** which is similar to the recoater **10** of FIG. 2, except that recoater **82** includes tabs, e.g. tab **84,** positioned to prevent build powder from escaping from the powder reservoir near the conveyor belt **86.**

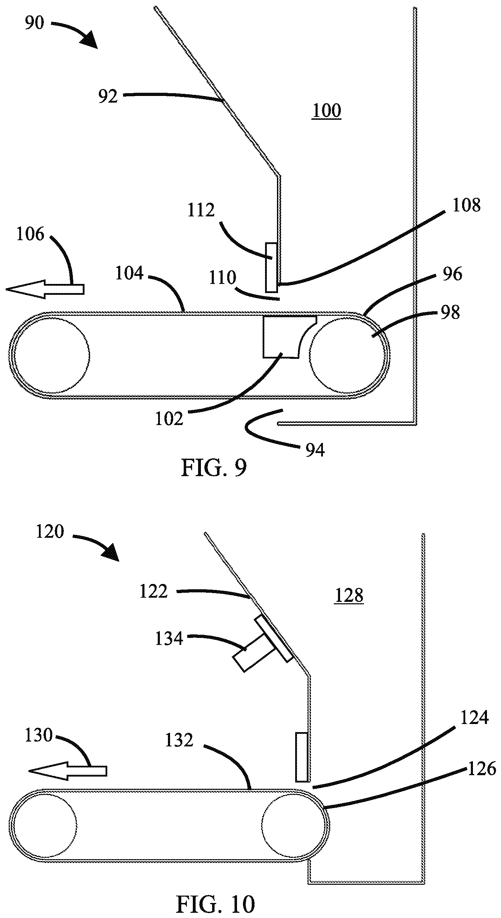

The embodiments described so far in this section have the conveyor belt in operative communication with the the powder reservoir of the recoater by way of an opening located at the bottom of the powder reservoir. In some embodiments, the conveyor belt is in operative communication with the powder reservoir by way of one or more openings in the side of the powder reservoir. FIGS. 9 and 10 illustrate two such embodiments. Referring to FIG. 9, there is shown a schematic cross-sectional view of a portion of a recoater **90** having a powder reservoir **92** having a side opening **94** and a conveyor belt **96.** The conveyor belt **96** along with its supporting roller **98** are positioned within the cavity **100** of the powder reservoir **92** such that the build powder (not shown) contained within the cavity **100** is at least partially supported by the conveyor belt **96** and its support table **102.** During operation of the recoater **90,** the top side **104** of the conveyor belt **94** transports build powder from the cavity **100** in the direction indicated by arrow **106.** The top edge **108** of the side opening **94** may act as a gating device to control the thickness of the powder layer exiting the cavity **100** on the conveyor belt **96.** When this is the case, it is preferred that the height of the gap **110** between the conveyor belt top side **104** and the top edge **108** be adjustable by making the vertical position of the conveyor belt and/or the powder reservoir adjustable in relation to one another. In some embodiments, an adjustable gate, e.g., gate **112,** is provided for the purpose of controlling the thickness of the powder layer exiting the cavity **100** on the conveyor belt **96.**

Referring now to FIG. 10, there is shown a schematic cross-sectional view of a portion of a recoater **120** having a powder reservoir **122** having a side opening **124** and a conveyor belt **126.** This configuration is similar to that shown in FIG. 9 except that the conveyor belt **126** is positioned so that it supports little, if any of the build powder (not shown) contained within the cavity **128** of the powder reservoir **122.** The motion of the conveyor belt **126** during operation of the recoater **120** in the direction indicated by arrow **130** acts to collect build powder from the cavity **128** onto the top surface **132** of the conveyor belt **126.** In embodiments having this configuration, it is preferable to include a vibrator, e.g. the vibrator **134,** and/or some device within cavity **128,** e.g. an augur or a paddlewheel, to agitate the build powder so as to ensure continuous contact of build powder with the conveyor belt **126** during the operation of the recoater **120.** The thickness of the layer of build powder on the conveyor belt top surface **132** may be controlled in the manners described above with regard to FIG. 9.

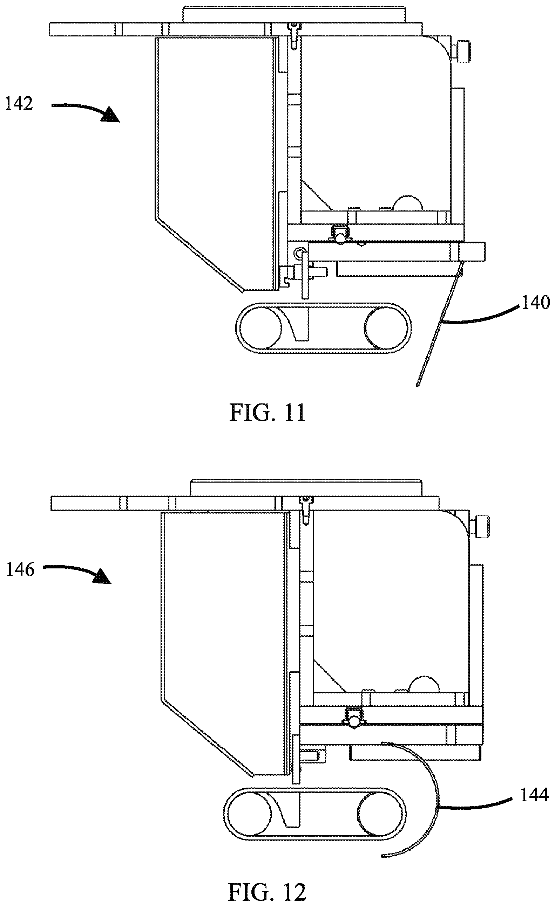

It is to be understood that, in embodiments, the powder deflector can take on any physical configuration so long as the powder deflector is capable of performing the function of deflecting the powder curtain emanating from the conveyor belt to the underlying powder bed or other substrate. Some such configurations of the powder deflectors are illustrated in FIGS. 11 and 12. The powder deflector **140** of the recoater **142** in FIG. 11 is configured as a straight blade which is oriented at an angle to the vertical. The powder deflector **144** of the recoater **146** in FIG. 12 is configured as an arcuate blade.

In some embodiments, a single component of the recoater is configured to perform the functions of a powder deflector and of a powder leveler. Such components are referred to hereinafter for convenience as a "powder deflector-leveler." In embodiments, powder deflectors-levelers can take on any configuration so long as the device is capable of both deflecting the powder curtain as it emanates from the conveyor belt and leveling the layer of build powder that is deposited as a result of the deflection.

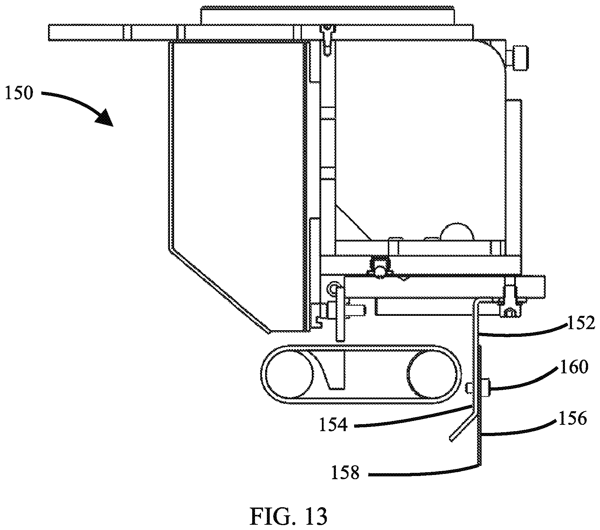

FIG. 13 shows a schematic cross-sectional side view of a recoater **150** having a powder deflector-leveler **152.** The face **154** of the powder deflector-leveler **152** performs the function of the powder deflector as described above. The member **156** of the powder deflector-leveler **152** performs the leveling function of a leveler as described above. The height of the bottom edge **158** of the member **156** above an underlying powder bed or other substrate is manually adjustable by way of retaining bolt **160** which resides in a slot (not shown) in the member **156** which permits the member **156** to be vertically positionable with respect the rest of the powder deflector-leveler **152.**

The deposition of fine powders is often accompanied by the problem of powder pluming. Powder pluming occurs when some or all of the powder particles being deposited have a terminal velocity which is less than the upward velocity component of a gas current or gas currents which are in the vicinity of where the powder is being deposited. Some embodiments are designed to reduce or eliminate powder pluming. Examples of some such embodiments will now be discussed.

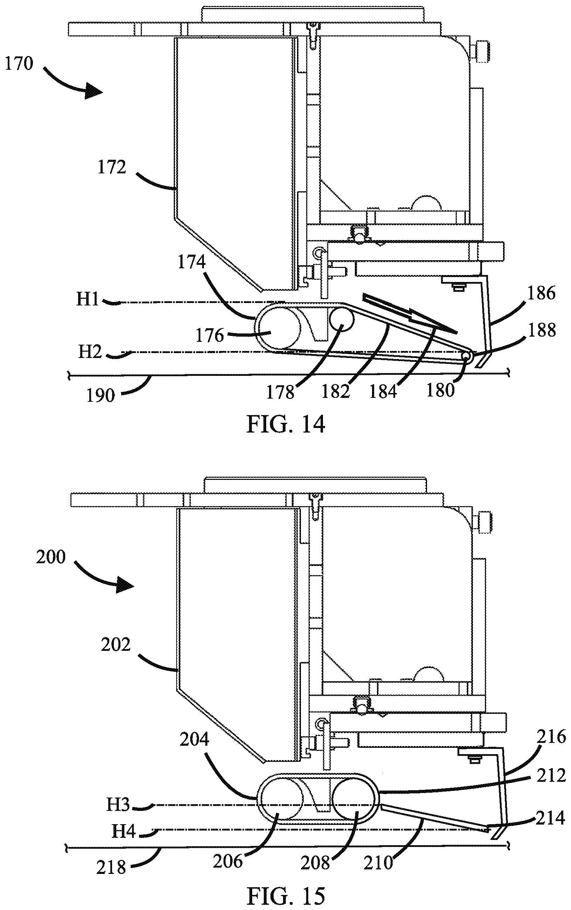

Referring now to FIG. 14, there is shown a schematic cross-sectional side view of a recoater embodiment which is designed to reduce or eliminate powder pluming. The recoater **170** has a powder reservoir **172** in operative communication with a conveyor belt **174,** which is supported and controllably driven by a set of rollers consisting of drive rollers **176, 178, 180** at least one of which may be a drive roller. The conveyor belt **174** includes downwardly inclined section **182,** which is adapted to controllably transport powder in the direction indicated by arrow **184.** The powder is received by the conveyor belt **174** from the powder reservoir **172** at a height **H1** and is controllably conveyed to a lower height **H2.** The recoater **170** also includes an optional powder deflector **186** which is spaced from the dispensing end **188** of the conveyor belt **174** so as to intercept and deflect a powder curtain (not shown) emanating from the dispensing end **188** before it contacts the powder bed **190.**

Referring now to FIG. 15, there is shown schematic cross-sectional side view of another recoater embodiment which is designed to reduce or eliminate pluming. The recoater **200** has a powder reservoir **202** in operative communication with a conveyor belt **204.** The conveyor belt **204** is supported and controllably driven by a set of rollers consisting of first and second rollers **206, 208,** either or both of which can be a drive roller and one of which can be an idler roller. The recoater **200** also includes a downwardly inclined chute **210** which is positioned to intercept a powder curtain (not shown) emanating from the discharge end **212** of conveyor belt **204** and controllably downwardly convey the powder contained in the powder curtain from height **H3** to lower height **H4** and then discharge it as another powder curtain (not shown) at its end **214.** The recoater **200** also includes an optional powder deflector **216** which is spaced from the chute end **214** so as to intercept and deflect the powder curtain emanating from it before the powder it contains contacts the powder bed **218.**

The powder contacting surface of the chute 210 may be configured to control the rate at which the powder slides across it, i.e., it surface may be flat or it may be corrugated or otherwise textured. Although the supporting structure for the chute 210 is not shown, it is to be understood that the supporting structure can adapted to fixedly or controllable set the downward inclination of the chute 210 and/or the proximity of the chute 210 to the conveyor belt 204.

Some embodiments having a downwardly inclined conveyor section have multiple downwardly conveyor sections. Some embodiments having an inclined chute have multiple downwardly inclined chutes.

It is to be understood that some embodiment recoaters which include a conveyor having a downwardly inclined section and/or a downwardly inclined chute may also include a powder leveling device and/or combination powder deflector/leveling device such as have been described above in this section. It is to be understood that included among the embodiments are three-dimensional printers which comprise a recoater having a downwardly inclined conveyor belt section and/or a downwardly inclined chute.

## Claims

1. A recoater (10) for a powder-layer three-dimensional printer (2) comprising:
a movable carriage (12) adapted to controllably traverse a substrate (4);
a powder reservoir (22) having a first opening (30) at or near its top adapted to receive a powder and a second opening (32) at or near its bottom adapted to discharge the powder;
a conveyor belt (24) in operative communication with the second opening (32) of the powder reservoir (22) and adapted to convey powder from the powder reservoir (22) and to dispense the conveyed powder as a powder curtain; and
a powder deflector (40);
wherein the powder reservoir (22), the conveyor belt (24), and the powder deflector (40) are carried by the carriage (12) and the powder deflector (40) is positioned to deflect the powder curtain onto the substrate (4) emanating from the conveyor belt (24) .

2. The recoater (10) of claim 1, wherein the conveyor belt (24) has a downwardly inclined section (182).

3. The recoater (10) of claim 1 further comprising a downwardly inclined chute (210) positioned between the conveyor belt (24) and the powder deflector (40).

4. The recoater (10) of any of claims 1 to 3, further including a leveling device (54, 62).

5. The recoater (10) of any of claims 1 to 3, wherein the powder reservoir (22) has a bottom opening (32) and the conveyor belt (24) is in operative communication with the bottom opening (32).

6. The recoater (10) of any of claims 1 to 3, wherein the powder reservoir (22) has a side opening (94) and the conveyor belt (24) is in operative communication with the side opening (94).

7. The recoater (10) of any of claims 1 to 3, wherein the powder deflector (40) is a powder-deflector leveler (152).

8. The recoater (10) of any of claims 1 to 3 further including a gate (50) adapted to control the thickness of a layer of a build powder on the conveyor belt (24).

9. The recoater (10) of any of claims 1 to 3 further comprising a shroud enclosure (72) adapted to at least partially contain a powder cloud resulting from the dispensing of powder by the recoater (10).

10. The recoater (10) of any of claims 1 to 3 further comprising a support table (102) proximal to the conveyor belt (24).

11. A powder-layer three-dimensional printer (2) comprising a recoater (10) according to any of the preceding claims.

## Patentansprüche

1. Beschichter (10) für einen Pulverschicht-3D-Drucker (2), aufweisend:
einen bewegbaren Träger (12), der dazu eingerichtet ist, ein Substrat (4) steuerbar zu überfahren;
einen Pulverbehälter (22), der eine erste Öffnung (30) an oder in der Nähe seiner Oberseite hat, die dazu eingerichtet ist, ein Pulver aufzunehmen, und der eine zweite Öffnung (32) an oder in der Nähe seiner Unterseite hat, die dazu eingerichtet ist, das Pulver auszugeben;
ein Förderband (24), das mit der zweiten Öffnung (32) des Pulverbehälters (22) in operativer Verbindung ist und dazu eingerichtet ist, Pulver von dem Pulverbehälter (22) zu fördern und das geförderte Pulver als Pulvervorhang auszugeben; und
einen Pulverablenker (40);
wobei der Pulverbehälter (22), das Förderband (24) und der Pulverablenker (40) von dem Träger (12) getragen werden und der Pulverablenker (40) positioniert ist, um den von dem Förderband (24) ausströmenden Pulvervorhang auf das Substrat (4) abzulenken.

2. Beschichter (10) nach Anspruch 1, wobei das Förderband (24) einen nach unten geneigten Abschnitt (182) hat.

3. Beschichter (10) nach Anspruch 1, ferner aufweisend eine nach unten geneigte Rutsche (210), die zwischen dem Förderband (24) und dem Pulverablenker (40) angeordnet ist.

4. Beschichter (10) nach einem der Ansprüche 1 bis 3, ferner aufweisend eine Nivelliervorrichtung (54, 62).

5. Beschichter (10) nach einem der Ansprüche 1 bis 3, wobei der Pulverbehälter (22) eine untere Öffnung (32) hat und das Förderband (24) in operativer Verbindung mit der unteren Öffnung (32) ist.

6. Beschichter (10) nach einem der Ansprüche 1 bis 3, wobei der Pulverbehälter (22) eine seitliche Öffnung (94) hat und das Förderband (24) in operativer Verbindung mit der seitlichen Öffnung (94) ist.

7. Beschichter (10) nach einem der Ansprüche 1 bis 3, wobei der Pulverablenker (40) ein Pulverablenker-Nivellierer (152) ist.

8. Beschichter (10) nach einem der Ansprüche 1 bis 3, ferner aufweisend eine Sperre (50), die dazu eingerichtet ist, die Dicke einer Schicht eines Baupulvers auf dem Förderband (24) zu steuern.

9. Beschichter (10) nach einem der Ansprüche 1 bis 3, ferner aufweisend ein Abdeckgehäuse (72), das dazu eingerichtet ist, zumindest teilweise eine Pulverwolke aufzunehmen, die von dem Ausgeben des Pulvers durch den Beschichter (10) resultiert.

10. Beschichter (10) nach einem der Ansprüche 1 bis 3, ferner aufweisend einen Stütztisch (102) in der Nähe des Förderbands (24) .

11. Pulverschicht-3D-Drucker (2), aufweisend einen Beschichter (10) gemäß einem der vorhergehenden Ansprüche.

## Revendications

1. Dispositif de recouvrement (10) pour une imprimante tridimensionnelle à couche de poudre (2), comprenant :
un chariot mobile (12) adapté pour traverser de manière contrôlée un substrat (4) ;
un réservoir de poudre (22) ayant une première ouverture (30) à son haut ou près de celui-ci, adaptée pour recevoir une poudre et une deuxième ouverture (32) à son fond ou près de celui-ci, adaptée pour décharger la poudre ;
une bande transporteuse (24) en communication opérationnelle avec la deuxième ouverture (32) du réservoir de poudre (22) et adaptée pour transporter la poudre depuis le réservoir de poudre (22) et pour distribuer la poudre transportée sous forme de rideau de poudre ; et
un déflecteur de poudre (40) ;
dans lequel le réservoir de poudre (22), la bande transporteuse (24) et le déflecteur de poudre (40) sont portés par le chariot (12) et le déflecteur de poudre (40) est positionné de manière à dévier le rideau de poudre sur le substrat (4) émanant de la bande transporteuse (24).

2. Dispositif de recouvrement (10) selon la revendication 1, dans lequel la bande transporteuse (24) a une section inclinée vers le bas (182).

3. Dispositif de recouvrement (10) selon la revendication 1, comprenant en outre une goulotte (210) inclinée vers le bas, positionnée entre la bande transporteuse (24) et le déflecteur de poudre (40).

4. Dispositif de recouvrement (10) selon l'une quelconque des revendications 1 à 3, comprenant en outre un dispositif de mise à niveau (54, 62).

5. Dispositif de recouvrement (10) selon l'une quelconque des revendications 1 à 3, dans lequel le réservoir de poudre (22) a une ouverture inférieure (32) et la bande transporteuse (24) est en communication opérationnelle avec l'ouverture inférieure (32).

6. Dispositif de recouvrement (10) selon l'une quelconque des revendications 1 à 3, dans lequel le réservoir de poudre (22) a une ouverture latérale (94) et la bande transporteuse (24) est en communication opérationnelle avec l'ouverture latérale (94).

7. Dispositif de recouvrement (10) selon l'une quelconque des revendications 1 à 3, dans lequel le déflecteur de poudre (40) est un niveleur de déflecteur de poudre (152).

8. Dispositif de recouvrement (10) selon l'une quelconque des revendications 1 à 3, comprenant en outre une barrière (50) adaptée pour contrôler l'épaisseur d'une couche d'une poudre de construction sur la bande transporteuse (24).

9. Dispositif de recouvrement (10) selon l'une quelconque des revendications 1 à 3, comprenant en outre un boîtier de recouvrement (72) adapté pour contenir au moins partiellement un nuage de poudre résultant de la distribution de poudre par le dispositif de recouvrement (10).

10. Dispositif de recouvrement (10) selon l'une quelconque des revendications 1 à 3, comprenant en outre une table de support (102) proximale à la bande transporteuse (24) .

11. Imprimante tridimensionnelle à couche de poudre (2) comprenant un dispositif de recouvrement (10) selon l'une quelconque des revendications précédentes.
